# EUROPEAN PATENT SPECIFICATION

(11) **EP 1 429 083 B1**
(45) Date of publication and mention of the grant of the patent: **24.01.2007**
(21) Application number: 03027797.4
(22) Date of filing: 03.12.2003
(51) Int. Cl.: F24F 11/00

(54) **Multi-air conditioner system with integrated control system**
Mehrzonenklimaanlage mit integriertem Steuersystem
Conditionneur d'air à unités multiples avec système de commande intégré

(30) Priority: 10.12.2002 KR 2002078331; 10.12.2002 KR 2002078332
(43) Date of publication of application: 16.06.2004
(73) Proprietor: LG ELECTRONICS INC., Seoul 150-010 (KR)
(72) Inventor: Yoon, Sang Chul, Koyang-si, Kyungki-do 411-370 (KR); Jeon, Duck Gu, Seoul 133-070 (KR); Jung, Jae Sik, Seoul 142-108 (KR); Kwon, Jae Hwan, Yeoungdungpo-ku, Seoul 150-754 (KR)
(74) Representative: TER MEER - STEINMEISTER & PARTNER GbR

(56) References cited:
- EP-A- 0 967 766
- US-A1- 2001 048 376
- US-A1- 2002 029 096
- US-A1- 2002 154 057

## Description

### BACKGROUND OF THE INVENTION

### Field of the Invention

The present invention relates to integrated controlled multi-air conditioner systems, and more particularly to an integrated controlled multi-air conditioner system wherein a protocol conversion unit is provided to convert different communication protocols into each other to simultaneously control the multi-air conditioner system over an internal network or an external Internet network, and an integrated control unit is provided to reduce the number of public Internet protocol (IP) addresses required for remote control over the Internet and increase a control manager's convenience.

### Description of the Related Art

Recently, inexpensive and efficient air conditioner systems have been-- increasingly installed in large-scale buildings or homes. Such a typical air conditioner system has a plurality of indoor units installed within a large-scale building or home, and one outdoor unit connected in common with the indoor units for controlling refrigerant circulation and distribution with respect to the indoor units. In particular, in a place where the central control of internal air conditioning is required, such as a large-scale building, a plurality of air conditioner systems may be provided in all floors of the building, respectively. In this case, the air conditioner systems each include a plurality of indoor units installed within office rooms in a corresponding one of the floors, respectively, and one outdoor unit connected in common with the indoor units installed in the corresponding floor for controlling them. This overall system is typically called a multi-air conditioner system. This multi-air conditioner system has recently been increasingly used owing to the fact that it is lower in initial construction cost and maintenance/management cost than air conditioner systems each having an indoor unit and outdoor unit installed for every room.

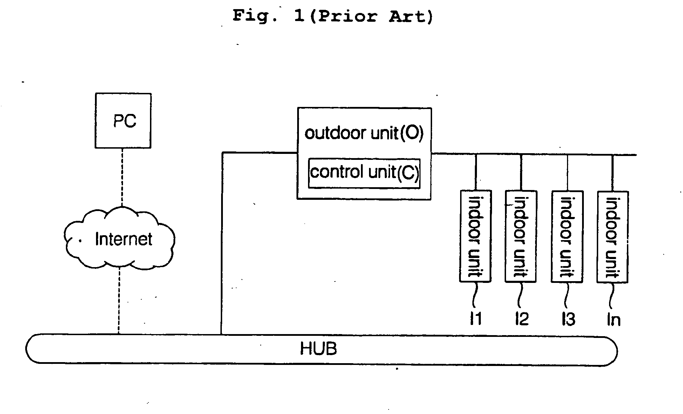

With reference to Fig. 1, there is shown in block form the construction of such a conventional multi-air conditioner system. As shown in this drawing, the conventional multi-air conditioner system comprises a plurality of indoor units I1-In installed inside of a building, one outdoor unit 0 installed outside of the building and connected in common with the indoor units I1-In, and a control unit C installed in the outdoor unit O for controlling the indoor units I1-In.

Particularly, as home network systems have been in the spotlight, recently, the outdoor unit 0 has been implemented to be connected with an external Internet network for transmission and reception of data to/from external terminals (see for example patent document US-2002/029026-A). In this case, a user can input an indoor unit control command to the outdoor unit 0 by operating an Internet terminal such as an Internet accessible personal computer (PC).

In the conventional multi-air conditioner system with the above-mentioned construction, however, the outdoor unit 0 must be assigned a public IP address so that it can be accessed over the external Internet network. In this connection, in an apartment or large-scale building where a larger number of outdoor units are required because they must be installed in respective floors, a considerable amount of cost is required in assigning public IP addresses respectively to the outdoor units and there is a concern that the IP addresses could be wasted.

Further, since the outdoor units are provided in distinction from one another and assigned different public IP addresses, the user has to gain access to any one of the outdoor units connected with a specific indoor unit in the building over the external Internet network to control the specific indoor unit. For this reason, in the case of controlling a plurality of unspecified indoor units, the user cannot control the indoor units at one time and has the inconvenience of having to individually access outdoor units connected respectively with the indoor units.

### SUMMARY OF THE INVENTION

Therefore, the present invention has been made in view of the above problems, and it is an object of the present invention to provide an economical, integrated controlled multi-air conditioner system wherein a plurality of air conditioners can be controlled in an individual or integrated manner over an internal network and in a remote manner over an external Internet network, thereby increasing a control manager's convenience and saving time and cost required for controlling, managing and maintaining the air conditioners.

In accordance with one aspect of the present invention, the above and other objects can be accomplished by the provision of an integrated controlled multi-air conditioner system comprising a plurality of groups of indoor units; a plurality of outdoor units connected with the indoor unit groups, respectively; at least one local control means connected in common with the outdoor units over an internal network for controlling operations of the outdoor units; and protocol conversion means connected with the local control means, the protocol conversion means converting different communication protocols of data transmitted and received between an external Internet network and the internal network into each other to transfer a control command received over the external Internet network to at least one of the outdoor units.

In accordance with another aspect of the present invention, there is provided an integrated controlled multi-air conditioner system comprising a plurality of groups of indoor units; a plurality of outdoor units connected with the indoor unit groups, respectively; a plurality of local control means connected with the outdoor units over an internal network for controlling operations of the outdoor units, respectively; and a plurality of protocol conversion means networked with the plurality of local control means, respectively, each of the plurality of protocol conversion means converting different communication protocols of data transmitted and received between an external Internet network and the internal network into each other to transfer a control command received over the external Internet network to a corresponding one of the outdoor units.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram showing the construction of a conventional multi-air conditioner system;
Fig. 2 is a block diagram showing the construction of an integrated controlled multi-air conditioner system in accordance with a first embodiment of the present invention;
Fig. 3 is a block diagram of a protocol conversion unit in accordance with the first embodiment of the present invention;
Fig. 4 is a block diagram of an integrated control unit in accordance with the first embodiment of the present invention;
Fig. 5 is a view showing a table stored in an IP translation/sharing unit in accordance with the first embodiment of the present invention;
Fig. 6 is a block diagram showing the construction of an integrated controlled multi-air conditioner system in accordance with a second embodiment of the present invention;
Fig. 7 is a block diagram showing the construction of an integrated controlled multi-air conditioner system in accordance with a third embodiment of the present invention;
Fig. 8 is a block diagram showing the construction of an integrated controlled multi-air conditioner system in accordance with a fourth embodiment of the present invention;
Fig. 9 is a block diagram showing the construction of an integrated controlled multi-air conditioner system in accordance with a fifth embodiment of the present invention; and
Fig. 10 is a view showing a table stored in an IP translation/sharing unit in accordance with the fifth embodiment of the present invention.

### DESCRIPTION OF THE PREFERRED EMBODIMENTS

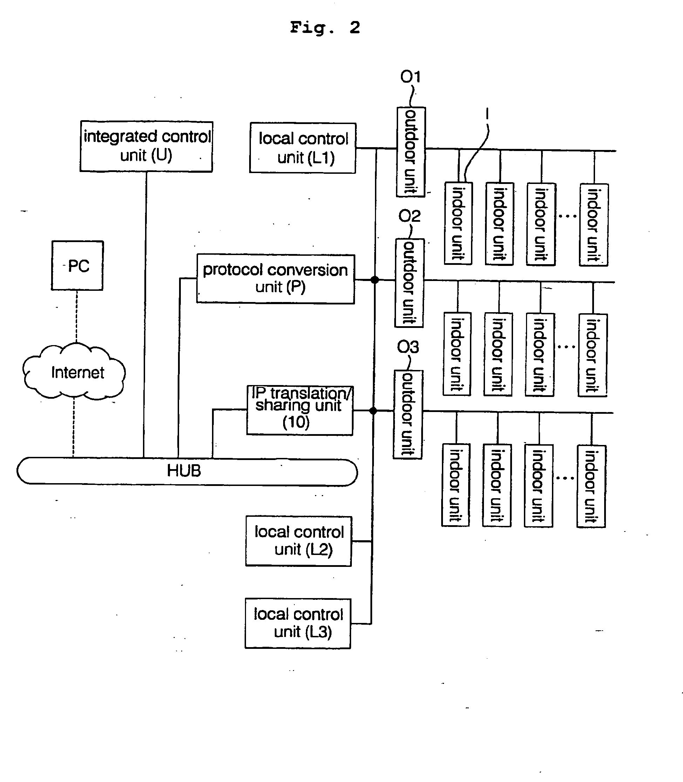

With reference to Fig. 2, there is shown in block form the construction of an integrated controlled multi-air conditioner system in accordance with a first embodiment of the present invention. As shown in this drawing, the integrated controlled multi-air conditioner system comprises a plurality of groups of indoor units I, a plurality of outdoor units O1-O3 connected with the indoor unit groups, respectively, a plurality of local control units L1-L3 connected with the outdoor units O1-O3, respectively, and a protocol conversion unit P connected in common with the local control units L1-L3 over an internal network for converting different communication protocols of data transmitted and received between an external Internet network and the internal network into each other so that the local control units L1-L3 can transmit and receive data to/from the external Internet network according to an Ethernet protocol.

Preferably, the local control units L1-L3 are each adapted to receive a control command and transfer the received control command to a corresponding one of the outdoor units O1-O3 connected to the internal network to control a corresponding one of the indoor unit groups connected with the corresponding outdoor unit in an integrated manner.

Alternatively, the local control units L1-L3 may be in communication with one another. In this case, each of the local control units L1-L3 can be connected with all of the outdoor units O1-O3 to transfer a control command thereto. Therefore, a user (or remote user) of the integrated controlled multi-air conditioner system according to the present invention can transfer a control command to the distributed outdoor units O1-O3 via any of the local control units L1-L3.

The integrated controlled multi-air conditioner system according to the present invention further comprises an integrated control unit U for simultaneously controlling the local control units L1-L3 in an integrated manner. The integrated control unit U is networked with the local control units L1-L3 via a hub, which concentrates transfer lines of all devices connected to the internal network at the center of the internal network and relays transmission and reception of data between the transfer lines and the external Internet network.

Accordingly, the remote user can control the air conditioner system without using a separate dedicated control device. For example, the remote user may gain access to the integrated control unit U by operating an Internet terminal accessible to the external Internet network. In this case, the integrated control unit U controls the air conditioner system by transferring a control command inputted from the remote user to the local control units L1-L3 over the internal network.

Note that the external Internet network is based on an Ethernet protocol (802.X) and the internal network is based on an RS-485 standard protocol. In this regard, the protocol conversion unit P is provided to convert the different communication protocols into each other to guarantee stability in the internal/external control of the multi-air conditioner system.

The integrated control unit U and protocol conversion unit P are assigned private IP addresses for their identification, respectively, because they are connected to the internal network. In this connection, the integrated controlled multi-air conditioner system according to the present invention further comprises an IP translation/sharing unit 10 for translating the private IP address of the integrated control unit U into a public IP address for connection with the external Internet network via the integrated control unit U, and, if an Internet terminal connected with the external Internet network, such as a PC, transmits a control command to the public IP address, translating the public IP address into the private IP address of the integrated control unit U or protocol conversion unit P and transferring the transmitted control command to the integrated control unit U or protocol conversion unit P on the basis of the translated private IP address.

The integrated control unit U, protocol conversion unit P and IP translation/sharing unit 10 are interconnected over the internal network to transmit and receive data to/from one another, and the hub is connected with the internal network to relay data transmitted and received between the internal network and the external Internet network.

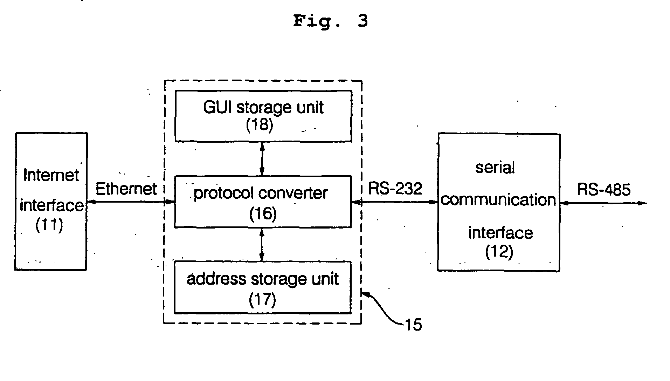

Fig. 3 is a block diagram of the protocol conversion unit P.

As shown in Fig. 3, the protocol conversion unit P includes an Internet interface 11 for transmitting and receiving data to/from the external Internet network according to the Ethernet protocol, a serial communication interface 12 connected with the local control units L1-L3 in a serial communication manner, and a communication control unit 15 for controlling transmission and reception of data between the Internet interface 11 and the serial communication interface 12. The communication control unit 15 includes a protocol converter 16 for converting the Ethernet protocol into a serial communication protocol to enable data communication with the outdoor units.

The communication control unit 15 further includes an address storage unit 17 for storing private IP addresses and port numbers assigned respectively to the local control units L1-L3. The protocol converter 16 is provided in the communication control unit 15 to convert different communication protocols of data transmitted and received between the Internet interface 11 and the serial communication interface 12 into each other. The communication control unit 15 further includes a graphic user interface (GUI) storage unit 18 for storing a GUI-based air conditioner control program for enabling the user to remotely control the local control units L1-L3 or outdoor units O1-O3 using an Internet terminal accessible to the Internet.

In particular, where the Internet terminal gains direct access to the protocol conversion unit P over the external Internet network, the GUI storage unit 18 sends the air conditioner control program to the Internet terminal over the external Internet network in response to a request therefrom. The Internet terminal may be, for example, a PC, notebook or Web pad accessible to the Internet.

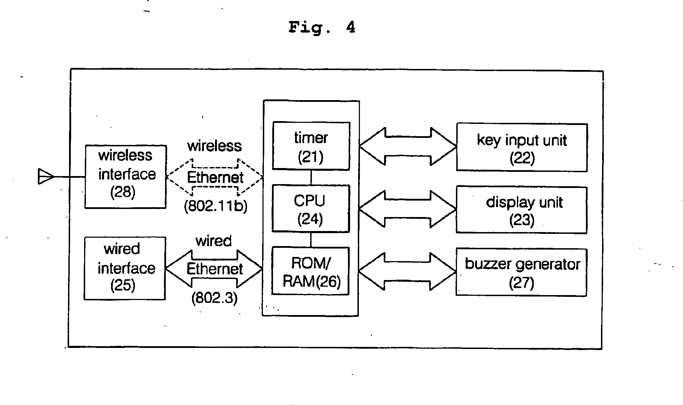

Fig. 4 is a block diagram of the integrated control unit U.

As shown in Fig. 4, the integrated control unit U includes a timer 21 for establishing synchronization of a control system of the integrated control unit U, a key input unit 22 for inputting commands for control of the operations of the outdoor units O1-O3, a display unit 23 for displaying the control commands inputted through the key input unit 22 and the associated outdoor unit/indoor unit control states, a central processing unit (CPU) 24 for controlling signal input and output of the key input unit 22 and display unit 23 and transmission and reception of data over the internal network, and a wired interface 25 for transmitting and receiving data between the CPU 24 and the protocol conversion unit P according to the Ethernet protocol.

The integrated control unit U further includes a read only memory (ROM)/random access memory (RAM) unit 26 connected with the CPU 24 for storing a program associated with the operation of the integrated control unit U and peripheral device drivers, and a buzzer generator 27 connected with the CPU 24. The integrated control unit U further includes a wireless interface 28 for transmitting and receiving data in a wireless manner.

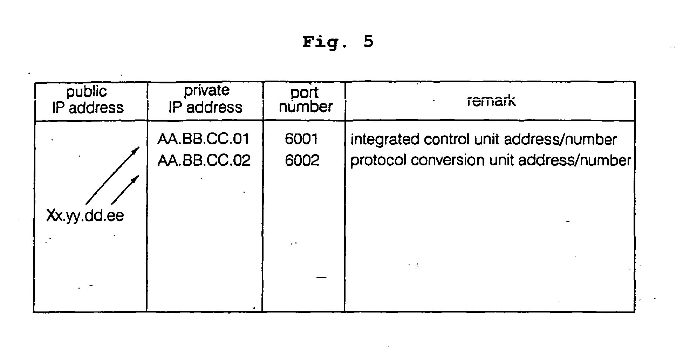

Fig. 5 shows a table stored in the IP translation/sharing unit 10. As shown in this drawing, the IP translation/sharing unit 10 stores a public IP address assigned to the multi-air conditioner system and private IP addresses and port numbers assigned respectively to the integrated control unit U and protocol conversion unit P in the form of a table. As a result, if an air conditioner control command is inputted to the public IP address xx.yy.dd.ee over the external Internet network, then the IP translation/sharing unit 10 transfers the inputted control command to the integrated control unit U or protocol conversion unit P on the basis of the private IP addresses and associated port numbers included in the table.

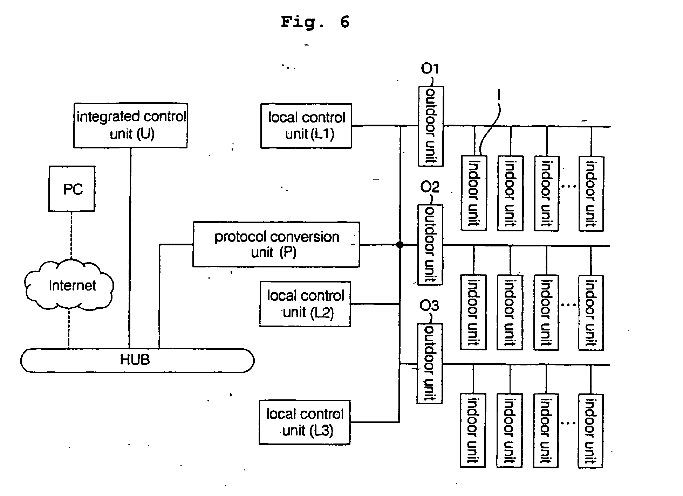

With reference to Fig. 6, there is shown in block form the construction of an integrated controlled multi-air conditioner system in accordance with a second embodiment of the present invention. The second embodiment is different in construction from the first embodiment in that it has no IP translation/sharing unit 10.

As shown in Fig. 6, the integrated controlled multi-air conditioner system comprises a plurality of groups of indoor units I, a plurality of outdoor units O1-O3 connected respectively with the indoor unit groups and in common with an internal network, a plurality of local control units L1-L3 connected with the internal network for controlling the outdoor units O1-O3, respectively, a protocol conversion unit P for converting different communication protocols of data transmitted and received between an external Internet network and the internal network into each other, namely, a communication protocol of the internal network and an Ethernet protocol, so that the local control units L1-L3 can transmit and receive data to/from the external Internet network, and an integrated control unit U assigned a public IP address so that it is externally accessible.

In the present embodiment, where an Internet terminal, such as a PC, gains access to the integrated control unit U through the public IP address assigned thereto and inputs an air conditioner control command, then the inputted control command is transferred to the protocol conversion unit P via a hub, which concentrates transfer lines of the integrated control unit U and protocol conversion unit P at the center of the internal network.

The protocol conversion unit P converts a communication protocol of the transferred control command into the communication protocol of the internal network so that the control command can be processed by the local control units L1-L3, and then sends the control command to a corresponding one of the local control units L1-L3.

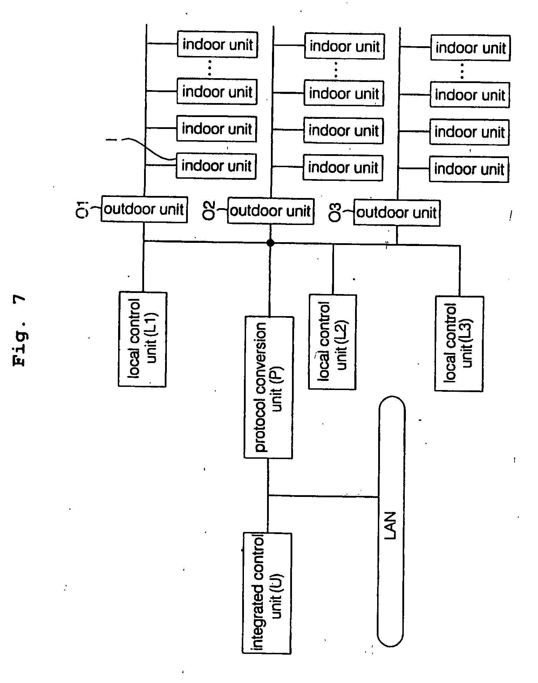

With reference to Fig. 7, there is shown in block form the construction of an integrated controlled multi-air conditioner system in accordance with a third embodiment of the present invention.

As shown in Fig. 7, the integrated controlled multi-air conditioner system comprises a plurality of groups of indoor units I, a plurality of outdoor units O1-O3 connected respectively with the indoor unit groups, a plurality of local control units L1-L3 each connectable with all of the outdoor units O1-O3, a protocol conversion unit P for converting different data communication protocols into each other so that the local control units L1-L3 can transmit and receive data over an internal network, and an integrated control unit U connected directly with the protocol conversion unit P for transferring a control command from an external Internet network to the protocol conversion unit P.

In the third embodiment, the integrated control unit U and the protocol conversion unit P are interconnected directly, not via a separate hub, thereby reducing costs required for system construction. The integrated control unit U transfers a control command inputted for integrated control by the user to the plurality of local control units L1-L3 via the protocol conversion unit P. Accordingly, the user can control the plurality of outdoor units O1-O3 and the plurality of groups of indoor units I at the same time.

The integrated control unit U in the third embodiment is assigned a public IP address so that it can transmit and receive data directly to/from the external Internet network, in a similar manner to that in the second embodiment.

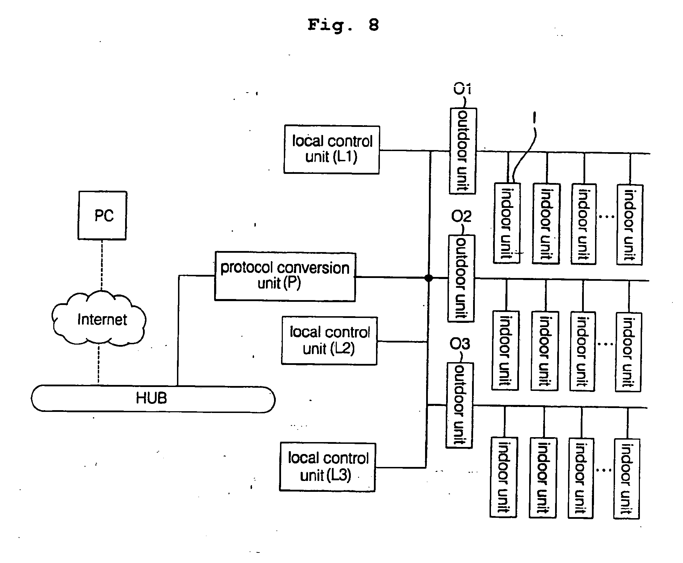

With reference to Fig. 8, there is shown in block form the construction of an integrated controlled multi-air conditioner system in accordance with a fourth embodiment of the present invention. As shown in this drawing, the integrated controlled multi-air conditioner system comprises a plurality of groups of indoor units I, a plurality of outdoor units O1-O3 connected respectively with the indoor unit groups, a plurality of local control units L1-L3 each connectable with all of the outdoor units O1-O3 for controlling the indoor units I and outdoor units O1-O3 from a local area, and a protocol conversion unit P for converting different data communication protocols into each other so that the local control units L1-L3 can be controlled over an external Internet network.

In the fourth embodiment, the protocol conversion unit P is assigned a public IP address so that it can transmit and receive data directly to/from the external Internet network. An Internet terminal connected to the external Internet network, such as a PC, can gain access to the protocol conversion unit P through the public IP address over the Internet network, download an air conditioner control program stored in the protocol conversion unit P, and input a command for the control of the plurality of indoor units or outdoor units according to the downloaded control program. The air conditioner control program is preferably implemented with a GUI to improve the convenience of the user's operation.

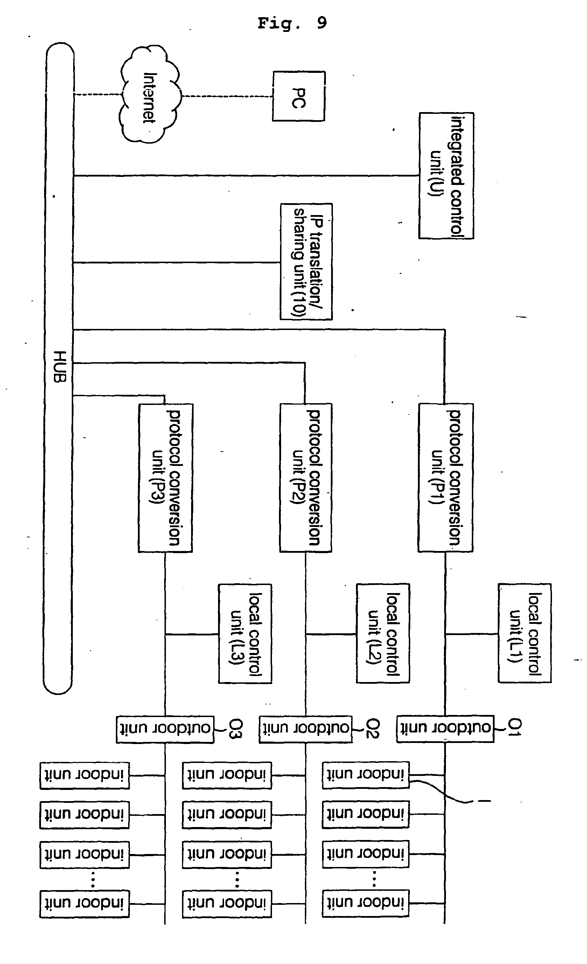

With reference to Fig. 9, there is shown in block form the construction of an integrated controlled multi-air conditioner system in accordance with a fifth embodiment of the present invention.

As shown in Fig. 9, the integrated controlled multi-air conditioner system comprises a plurality of groups of indoor units I, a plurality of outdoor units O1-O3 connected respectively with the indoor unit groups, a plurality of local control units L1-L3 each connected with a corresponding one of the outdoor units O1-O3 for controlling the corresponding outdoor unit and a corresponding one of the indoor unit groups connected with the corresponding outdoor unit from a local area, and a plurality of protocol conversion units P1-P3 connected respectively with the local control units L1-L3 for converting different communication protocols of data transmitted and received between an internal network and an external Internet network into each other.

The integrated controlled multi-air conditioner system further comprises an - IP translation/sharing unit 10 for translating a public IP address into an internally designated private IP address, and an integrated control unit U for controlling the local control units L1-L3 in an integrated manner. The protocol conversion units P1-P3, which are one-to-one matched with the local control units L1-L3, the IP translation/sharing unit 10 and the integrated control unit U are concentrated at a hub so that they can be inter-networked.

In the fifth embodiment, the user can gain access to the integrated control unit U using an Internet terminal accessible to the external Internet network and input a control command thereto. At this time, the integrated control unit U sends the inputted control command to only one of the local control units L1-L3 connected with indoor units/outdoor unit corresponding to the control command, because the protocol conversion units P1-P3 are connected respectively with the local control units L1-L3. Therefore, as compared with the first to fourth embodiments each comprising the single protocol conversion unit P, the fifth embodiment has a shorter data transfer time and a reduced amount of workload, and thus a more stable data transfer capability.

That is, in the multi-air conditioner system implemented in the fifth embodiment, the integrated control unit U scans a specific indoor unit corresponding to a control command from only a list of indoor units managed by an outdoor unit connected with the specific indoor unit, because the protocol conversion units P1-P3 are connected respectively with the local control units L1-L3 as shown in Fig. 9. As a resuit, the scanning time becomes shorter, thereby realizing a higher communication speed.

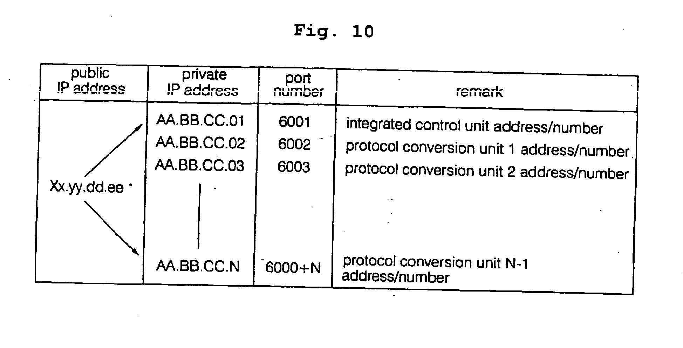

On the other hand, the IP translation/sharing unit 10 of the fifth embodiment has a table as shown in Fig. 10. The IP translation/sharing unit 10 translates a public IP address contained in a control signal transferred through the integrated control unit U into a private IP address and port number of a corresponding one of the local control units L1-L3 and then sends the control signal to the corresponding local control unit.

As apparent from the above description, the present invention provides an integrated controlled multi-air conditioner system wherein an integrated control unit is connected with a plurality of outdoor units over an internal network and is assigned a public IP address so as to be externally accessible, so that a plurality of indoor units and the outdoor units can be controlled in a remote manner over an external Internet network and in an integrated manner over the internal network. Therefore, the integrated controlled multi-air conditioner system is economical in that it prevents waste of manpower and time for air conditioner management. A protocol conversion unit is also provided in the system to convert different communication protocols of data transmitted and received between the internal network and the external Internet network into each other. Therefore, it is possible to prevent communication errors from occurring due to the different communication protocols and construct a more stable multi-air conditioner control system.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An integrated controlled multi-air conditioner system comprising:
a plurality of groups of indoor units (I);
at least one local control means (L1-L3):
a plurality of outdoor units (O1-O3) connected with said indoor unit (I) groups, respectively; wherein said outdoor units (O1-O3) are connected via an internal network with a protocol conversion means (P1-P3) for converting different communication protocols of data transmitted and received between an external Internet network and said internal network into each other to transfer a control command received over said external Internet network to at least one of said outdoor units (O1-O3) **characterized in that** said protocol conversion means (P) is connected with said local control means (L1-L3) via said internal network, wherein said at least one local control means (L1-L3) is connected in common with said outdoor units (O1-O3) over said internal network for controlling operations of said outdoor units (O1-O3).

2. An integrated controlled multi-air conditioner system comprising:
a plurality of groups of indoor units (I);
a local control means (L1-L3);
a plurality of outdoor units (O1-O3) connected with said indoor unit (I) groups, respectively; wherein said outdoor units (O1-O3) are connected via an internal network with a protocol conversion means (P1-P3) for converting different communication protocols of data transmitted and received between an external Internet network and the internal network into each other, **characterized in that** a plurality of protocol conversion means (P1-P3) and a plurality of local control means (L1-L3) are arranged, wherein each one of said plurality of protocol conversion means (P1-P3) is coupled to one of said outdoor units (O1-O3) and to one of said local control means (L1-L3) over the internal network for controlling operations of said outdoor units (O1-O3), respectively; wherein a plurality of protocol conversion means (P1-P3) are adapted to transfer a control command received over said external Internet network to only one of said outdoor units (01-03).

3. The integrated controlled multi-air conditioner system as set forth in claim 1 or 2, further comprising integrated control means (U) for transferring a control command to said outdoor units (O1-O3) via said protocol conversion means (P) to control said outdoor units (O1-O3) in an integrated manner.

4. The integrated controlled multi-air conditioner system as set forth in claim 3, wherein said integrated control means (U) is assigned a public Internet protocol (IP) address and a private IP address so that it is accessible from said external Internet network and internal network, respectively.

5. The integrated controlled multi-air conditioner system as set forth in claim 1 or 2, wherein said protocol conversion means (P) is assigned a public IP address and a private IP address so that it is accessible from said external Internet network and internal network, respectively.

6. The integrated controlled multi-air conditioner system as set forth in claim 3, further comprising IP translation/sharing means (10) assigned a public IP address so that it is controllable from said external Internet network, said IP translation/sharing means (10) translating said public IP address contained in a control command received from said external Internet network into a private IP address and transferring the received control command to said integrated control means (U) or protocol conversion means (P) on the basis of the translated private IP address.

7. The integrated controlled multi-air conditioner system as set forth in claim 6, wherein said IP translation/sharing means (10) is adapted to store a table including private IP addresses and port numbers assigned respectively to all devices (U, P, P1-P3) connected to said internal network.

8. The integrated controlled multi-air conditioner system as set forth in claim 3, further comprising a hub for concentrating transfer lines of all devices (U. P, 10, P1-P3) connected to said internal network at a center of said internal network and relaying transmission and reception of data between said transfer lines and said external Internet network.

9. The integrated controlled multi-air conditioner system as set forth in claim 3, wherein said integrated control means (U) includes:
a timer (21) for establishing synchronization of a control system of said integrated control means;
a key input unit (22) for inputting commands for control of the operations of said outdoor units;
a display unit (23) for displaying the control commands inputted through said key input unit (22) and the associated outdoor unit/indoor unit control states;
a central processing unit (24) for controlling signal input and output of said key input unit (22) and display unit (23) and transmission and reception of data over said internal network; and
a wired interface (25) for transmitting and receiving data between said central processing unit and said protocol conversion means (P, P1-P3) according to an Ethernet protocol.

10. The integrated controlled multi-air conditioner system as set forth in claim 9, wherein said integrated control means (U) further includes a wireless interface (28) for transmitting and receiving data in a wireless manner based on a wireless Ethernet protocol.

11. The integrated controlled multi-air conditioner system as set forth in claim 3, wherein said protocol conversion means (P) includes:
an Internet interface (11) for transmitting and receiving data to/from said external Internet network according to an Ethernet protocol;
a serial communication interface (12) for transmitting and receiving data to/from said local control means (L1-L3) according to a serial communication protocol; and
communication control means (15) for controlling transmission and reception of data between said Internet interface (11) and said serial communication interface (12).

12. The integrated controlled multi-air conditioner system as set forth in claim 11, wherein said communication control means (15) includes:
an address storage unit (17) for storing a private IP address and port number assigned to said local control means (L1-L3); and
a protocol converter (16) for converting different communication protocols of data transmitted and received between said Internet interface (11) and said serial communication interface (12) into each other.

13. The integrated controlled multi-air conditioner system as set forth in claim 12, wherein said communication control means (15) further includes a graphic user interface (GUI) storage unit (18) for storing a GUI-based air conditioner control program for enabling a user to remotely control said local control means (L1-L3) or outdoor units (O1-O3) using an Internet terminal (PC) accessible to said external Internet network.

14. The integrated controlled multi-air conditioner system as set forth in claim 13, wherein said GUI storage unit (18) is adapted to send said air conditioner control program over said external Internet network in response to a request from said Internet terminal.

## Patentansprüche

1. Integriertes gesteuertes Mehrfachklimaanlagensystem, das umfasst:
mehrere Gruppen von Inneneinheiten (I);
wenigstens ein lokales Steuermittel (L1-L3);
mehrere Außeneinheiten (O1-O3), die mit den jeweiligen Gruppen von Inneneinheiten (I) verbunden sind; wobei die Außeneinheiten (O1-O3) über ein internes Netz mit einem Protokollumsetzungsmittel (P1-P3) verbunden sind, um unterschiedliche Kommunikationsprotokolle von Daten, die zwischen einem externen Internet-Netz und dem internen Netz gesendet und empfangen werden, ineinander umzusetzen, um einen über das externe Internet-Netz empfangenen Steuerbefehl an wenigstens eine der Außeneinheiten (O1-O3) zu übertragen, **dadurch gekennzeichnet, dass** die Protokollumsetzungsmittel (P) mit dem lokalen Steuermittel (L1-L3) über das interne Netz verbunden sind, wobei das wenigstens eine lokale Steuermittel (L1-L3) mit allen Außeneinheiten (O1-O3) über das interne Netz verbunden ist, um Betriebsabläufe der Außeneinheiten (O1-O3) zu steuern.

2. Integriertes gesteuertes Mehrfachklimaanlagensystem, das umfasst:
mehrere Gruppen von Inneneinheiten (I);
ein lokales Steuermittel (L1-L3);
mehrere Außeneinheiten (O1-03), die mit den jeweiligen Gruppen von Inneneinheiten (I) verbunden sind; wobei die Außeneinheiten (O1-O3) über ein internes Netz mit einem Protokollumsetzungsmittel (P1-P3) verbunden sind, um unterschiedliche Kommunikationsprotokolle von Daten, die zwischen einem externen Internet-Netz und dem internen Netz gesendet und empfangen werden, ineinander umzusetzen, **dadurch gekennzeichnet, dass** mehrere Protokollumsetzungsmittel (P1-P3) und mehrere lokale Steuermittel (L1-L3) vorgesehen sind, wobei jedes der mehreren Protokollumsetzungsmittel (P1-P3) über das interne Netz mit einer der Außeneinheiten (O1-O3) und mit einem der lokalen Steuermittel (L1-L3) verbunden ist, um Betriebsabläufe der jeweiligen Außeneinheiten (O1-O3) zu steuern; wobei mehrere Protokollumsetzungsmittel (P1-P3) dazu ausgelegt sind, einen über das externe Internet-Netz empfangenen Steuerbefehl nur an eine der Außeneinheiten (O1-O3) zu übertragen.

3. Integriertes gesteuertes Mehrfachklimaanlagensystem nach Anspruch 1 oder 2, ferner mit integrierten Steuermitteln (U) zum Übertragen eines Steuerbefehls an die Außeneinheiten (O1-O3) über die Protokollumsetzungsmittel (P), um die Außeneinheiten (O1-O3) in integrierter Weise zu steuern.

4. Integriertes gesteuertes Mehrfachklimaanlagensystem nach Anspruch 3, bei dem den integrierten Steuermitteln (U) eine öffentliche Internetprotokolladresse (IP-Adresse) und eine private IP-Adresse zugewiesen sind, so dass auf sie von dem externen Internet-Netz bzw. von dem internen Netz zugegriffen werden kann.

5. Integriertes gesteuertes Mehrfachklimaanlagensystem nach Anspruch 1 oder 2, bei dem den Protokollumsetzungsmitteln (P) eine öffentliche IP-Adresse und eine private IP-Adresse zugewiesen sind, so dass auf sie von dem externen Internet-Netz bzw. von dem internen Netz zugegriffen werden kann.

6. Integriertes gesteuertes Mehrfachklimaanlagensystem nach Anspruch 3, das ferner Mittel (10) zur IP-Übersetzung/gemeinsamen Nutzung umfasst, denen eine öffentliche IP-Adresse zugewiesen ist, so dass sie von dem externen Internet-Netz steuerbar sind, wobei die Mittel (10) zur IP-Übersetzung/gemeinsamen Nutzung die in einem von dem externen Internet-Netz empfangenen Steuerbefehl enthaltene öffentliche IP-Adresse in eine private IP-Adresse übersetzen und den empfangenen Steuerbefehl auf der Grundlage der übersetzten privaten IP-Adresse an das integrierte Steuermittel (U) oder an das Protokollumsetzungsmittel (P) übertragen.

7. Integriertes gesteuertes Mehrfachklimaanlagensystem nach Anspruch 6, bei dem die Mittel (10) zur IP-Übersetzung/gemeinsamen Nutzung so beschaffen sind, dass sie eine Tabelle speichern können, die private IP-Adressen und Port-Nummern, die sämtlichen mit dem internen Netz verbundenen Vorrichtungen (U, P, P1-P3) zugewiesen sind, enthält.

8. Integriertes gesteuertes Mehrfachklimaanlagensystem nach Anspruch 3, das ferner einen Hub umfasst, um Übertragungsleitungen sämtlicher Vorrichtungen (U, P, 10, P1-P3), die mit dem internen Netz verbunden sind, bei einer Zentrale des internen Netz zu konzentrieren und um das Senden und das Empfangen von Daten zwischen den Übertragungsleitungen und dem externen Internet-Netz zu verstärken.

9. Integriertes gesteuertes Mehrfachklimaanlagensystem nach Anspruch 3, bei dem die integrierten Steuermittel (U) umfassen:
einen Zeitgeber (21) zum Herstellen einer Synchronisation eines Steuersystems der integrierten Steuermittel;
eine Tasteneingabeeinheit (22) zum Eingeben von Befehlen für die Steuerung der Betriebsabläufe der Außeneinheiten;
eine Anzeigeeinheit (23) zum Anzeigen der Steuerbefehle, die über die Tasteneingabeeinheit (22) eingegeben werden, und der zugeordneten Außeneinheit/Inneneinheit-Steuerzustände;
eine Zentraleinheit (24) zum Steuern des Signaleingangs und des Signalausgangs der Tasteneingabeeinheit (22) und der Anzeigeeinheit (23) und des Sendens und des Empfangens von Daten über das interne Netz; und
eine verdrahtete Schnittstelle (25) zum Senden und Empfangen von Daten zwischen der Zentraleinheit und den Protokollumsetzungsmitteln (P, P1-P3) in Übereinstimmung mit einem Ethernet-Protokoll.

10. Integriertes gesteuertes Mehrfachklimaanlagensystem nach Anspruch 9, bei dem die integrierten Steuermittel (U) ferner eine Drahtlosschnittstelle (28) umfassen, um Daten auf der Grundlage eines Drahtlos-Ethernet-Protokolls drahtlos zu senden und zu empfangen.

11. Integriertes gesteuertes Mehrfachklimaanlagensystem nach Anspruch 3, bei dem die Protokollumsetzungsmittel (P) umfassen:
eine Internet-Schnittstelle (11) zum Senden und Empfangen von Daten zu dem externen Internet-Netz bzw. von diesem in Übereinstimmung mit einem Ethernet-Protokoll;
eine serielle Kommunikationsschnittstelle (12) zum Senden und Empfangen von Daten zu dem lokalen Steuermittel (L1-L3) bzw. von diesem in Übereinstimmung mit einem Protokoll für serielle Kommunikation; und
Kommunikationssteuermittel (15) zum Steuern des Sendens und Empfangens von Daten zwischen der Internet-Schnittstelle (11) und der Schnittstelle (12) für serielle Kommunikation.

12. Integriertes gesteuertes Mehrfachklimaanlagensystem nach Anspruch 11, bei dem die Kommunikationssteuermittel (15) umfassen:
eine Adressenspeichereinheit (17) zum Speichern einer privaten IP-Adresse und einer Port-Nummer, die dem lokalen Steuermittel (L1-L3) zugewiesen sind; und
einen Protokollumsetzer (16), um unterschiedliche Kommunikationsprotokolle der zwischen der Internet-Schnittstelle (11) und der Schnittstelle (12) für serielle Kommunikation gesendeten und empfangenen Daten ineinander umzusetzen.

13. Integriertes gesteuertes Mehrfachklimaanlagensystem nach Anspruch 12, bei dem die Kommunikationssteuermittel (15) ferner eine Speichereinheit (18) für eine graphische Anwenderschnittstelle (GUI) zum Speichern eines Klimaanlagen-Steuerprogramms auf GUI-Basis umfassen, um einem Anwender zu ermöglichen, das lokale Steuermittel (L1-L3) oder die Außeneinheiten (O1-O3) unter Verwendung eines Internet-Endgeräts (PC), mit dem auf das externe Internet-Netz zugegriffen werden kann, fernzusteuern.

14. Integriertes gesteuertes Mehrfachklimaanlagensystem nach Anspruch 13, bei dem die GUI-Steuereinheit (18) so beschaffen ist, dass sie das Klimaanlagen-Steuerprogramm in Reaktion auf eine Anforderung von dem Internet-Endgerät über das externe Internet-Netz senden kann.

## Revendications

1. Système avec une pluralité de climatiseurs à commande intégrée comprenant :
- une pluralité de groupes d'unités d'intérieur (I) ;
- au moins un moyen de commande locale (L1-L3);
- une pluralité d'unités d'extérieur (O1-O3) connectées auxdits groupes d'unités d'intérieur (I), respectivement ; où lesdites unités d'extérieur (O1-O3) sont connectées via un réseau interne avec un moyen de conversion de protocoles (P1-P3) pour convertir des protocoles différents de communication de données transmises et reçues entre un réseau Internet externe et ledit réseau interne l'un vers l'autre pour transférer une instruction de commande reçue sur ledit réseau Internet externe à au moins une desdites unités d'extérieur (O1-O3), **caractérisé en ce que** ledit moyen de conversion de protocoles (P) est connecté via ledit moyen de commande locale (L1-L3) via ledit réseau interne, où ledit au moins un moyen de commande locale (L1-L3) est connecté en commun avec lesdites unités d'extérieur (O1-O3) sur ledit réseau interne pour commander des fonctionnements desdites unités d'extérieur (O1-O3).

2. Système avec une pluralité de climatiseurs à commande intégrée comprenant :
- une pluralité de groupes d'unités d'intérieur (I) ;
- un moyen de commande locale (L1-L3);
- une pluralité d'unités d'extérieur (O1-O3) connectées auxdits groupes d'unités d'intérieur (I), respectivement ; où lesdites unités d'extérieur (O1-O3) sont connectées via un réseau interne avec un moyen de conversion de protocole (P1-P3) pour convertir des protocoles différents de communication de données transmises et reçues entre un réseau Internet externe et le réseau interne l'un vers l'autre, **caractérisé en ce qu'**une pluralité de moyens de conversion de protocoles (P1-P3) et une pluralité de moyens de commande locale (L1-L3) sont agencées, où chacun de ladite pluralité de moyens de conversion de protocoles (P1-P3) est couplé à l'une desdites unités d'extérieur (O1-O3) et à l'un desdits moyens de commande locale (L1-L3) sur le réseau interne pour commander des fonctionnements desdites unités d'extérieur (O1-O3), respectivement ; où une pluralité de moyens de conversion de protocoles (P1-P3) est adapté pour transférer une instruction de commande reçue sur ledit réseau Internet externe à seulement une desdites unités d'extérieur (O1-O3).

3. Système avec une pluralité de climatiseurs à commande intégrée selon la revendication 1 ou 2, comprenant en outre un moyen de commande intégrée (U) pour transférer une instruction de commande auxdites unités d'extérieur (O1-O3) via ledit moyen de conversion de protocoles (P) pour commander lesdites unités d'extérieur (O1-O3) d'une manière intégrée.

4. Système avec une pluralité de climatiseurs à commande intégrée selon la revendication 3, dans lequel une adresse publique de protocole Internet (IP) et une adresse IP privée sont attribuées au dit moyen de commande intégrée (U) de manière qu'il soit accessible à partir dudit réseau Internet externe et dudit réseau interne, respectivement.

5. Système avec une pluralité de climatiseurs à commande intégrée selon la revendication 1 ou 2, dans lequel une adresse IP publique et une adresse IP privée sont attribuées au dit moyen de conversion de protocoles (P) de manière qu'il soit accessible à partir dudit réseau Internet externe et dudit réseau interne, respectivement.

6. Système avec une pluralité de climatiseurs à commande intégrée selon la revendication 3, comprenant en outre un moyen de partage/conversion IP (10) auquel est attribuée une adresse IP publique de manière qu'il soit puisse être commandé à partir dudit réseau Internet externe, ledit moyen de partage/conversion IP (10) translatant ladite adresse IP publique en une adresse IP privée et transférant l'instruction de commande reçue au dit moyen de commande intégrée (U) ou au dit moyen de conversion de protocoles (P) sur la base de l'adresse IP privée convertie.

7. Système avec une pluralité de climatiseurs à commande intégrée selon la revendication 6, dans lequel ledit moyen de partage/conversion IP (10) est adapté pour mémoriser une table comprenant des adresses IP privées et des numéros de port attribués respectivement à tous les dispositifs (U, P, P1-P3) connectés audit réseau interne.

8. Système avec une pluralité de climatiseurs à commande intégrée selon la revendication 3, comprenant en outre un concentrateur pour concentrer des lignes de transfert de tous les dispositifs (U, P, 10, P1-P3) connectés au dit réseau interne au niveau d'un centre dudit réseau interne et retransmettre la transmission et la réception de données entre lesdites lignes de transfert et ledit réseau Internet externe.

9. Système avec une pluralité de climatiseurs à commande intégrée selon la revendication 3, dans lequel ledit moyen de commande intégrée (U) comprend :
- un compteur de temps (21) pour établir une synchronisation d'un système de commande dudit moyen de commande intégrée ;
- une unité d'entrée à touches (22) pour entrer des instructions pour commander les fonctionnements desdites unités d'extérieur ;
- une unité d'affichage (23) pour visualiser les instructions de commande entrées à travers ladite unité d'entrée à touches (22) et les états de commande d'unité d'extérieur/unité d'intérieur associés ;
- une unité centrale de traitement (24) pour commander des signaux d'entrée et de sortie de ladite unité d'entrée à touches (22) et ladite unité d'affichage (23) et la transmission et la réception de données sur ledit réseau interne ; et
- une interface câblée (25) pour transmettre et recevoir des données entre ladite unité centrale de traitement et ledit moyen de conversion de protocoles (P, P1-P3) suivant un protocole Ethernet.

10. Système avec une pluralité de climatiseurs à commande intégrée selon la revendication 9, dans lequel ledit moyen de commande intégrée (U) comprend en outre une interface sans fil (28) pour transmettre et recevoir des données d'une manière sans fil sur la base d'un protocole Ethernet sans fil.

11. Système avec une pluralité de climatiseurs à commande intégrée selon la revendication 3, dans lequel ledit moyen de conversion de protocoles (P) comprend :
- une interface Internet (11) pour transmettre et recevoir des données au dit/dudit réseau Internet externe suivant un protocole Ethernet ;
- une interface de communication série (12) pour transmettre et recevoir des données auxdits/desdits moyens de commande locale (L1-L3) suivant un protocole de communication série ;
- des moyens de commande de communication (15) pour commander la transmission et la réception de données entre ladite interface Internet (11) et ladite interface de communication série (12).

12. Système avec une pluralité de climatiseurs à commande intégrée selon la revendication 11, dans lequel lesdits moyens de commande de communication (15) comprennent :
- une unité de mémorisation d'adresses (17) pour mémoriser une adresse IP privée et un numéro de port attribués auxdits moyens de commande locale (L1-L3) ; et
- un convertisseur de protocoles (16) pour convertir des protocoles différents de communication de données transmises et reçues entre ladite interface Internet (11) et ladite interface de communication série (12) l'un vers l'autre.

13. Système avec une pluralité de climatiseurs à commande intégrée selon la revendication 12, dans lequel lesdits moyens de commande de communication (15) comprennent en outre une unité de mémoire d'interface graphique d'utilisateur (GUI) (18) pour mémoriser un programme de commande de conditionneur d'air basée sur une interface graphique d'utilisateur pour permettre à un utilisateur de commander à distance lesdits moyens de commande locale (L1-L3) ou lesdites unités d'extérieur (O1-O3) en utilisant un terminal Internet (PC) accessible au dit réseau Internet externe.

14. Système avec une pluralité de climatiseurs à commande intégrée selon la revendication 13, dans lequel ladite unité de mémoire d'interface graphique d'utilisateur (18) est adaptée pour transmettre ledit programme de commande de conditionneur d'air sur ledit réseau Internet externe en réponse à une demande provenant dudit terminal Internet.
